# EUROPEAN PATENT APPLICATION

(11) **EP 2 139 245 A1**
(43) Date of publication of application: **30.12.2009**
(21) Application number: 08733949.5
(22) Date of filing: 11.04.2008
(51) Int. Cl.: H04Q 7/32, H04B 1/38, H04B 5/02, H04R 1/10

(54) **WIRELESS EARPHONE**

(30) Priority: 16.04.2007 CN 200720143844 U; 04.09.2007 CN 200720176203 U
(71) Applicant: Wang, Yuhua, Da Mu Cang Hu Tong 35 Hao Xi Cheng Qu Beijing 100032 (CN)
(72) Inventor: CHAI, Lun, Shatin, N.T. Hong Kong (CN); WANG, Yuhua, Beijing 100032 (CN)
(74) Representative: Kahlhöfer, Hermann
(86) International application number: PCT/CN2008/000748
(87) International publication number: WO 2008/125013

(57) **Abstract**

The invention discloses a wireless earset (also known as BLUETOOTH earset) comprising a main body portion which has a built-in microphone; an earphone portion which is attached to the main body portion; and a connecting device which connects the main body portion to the earphone portion, **characterized in that** the earphone portion is held on the main body portion by the connecting device, and the connecting device has a rotating mechanism which cause the earphone portion to be rotated between a store state and a using state with respect to the main body portion.

## Description

### Field of the Invention

The invention relates to a wireless earset (e. g. a BLUETOOTH earset) which can be used operatively with a mobile phone.

### Background of the Invention

The wireless earset in the prior art is non ideal in the aspect of convenience for a user to use it. For example, firstly, an orientation of an earphone can not be rotated, and secondly, the wireless earset is not attached with a clamp so that when the earset is not being used, it can not be clamped at an expediently and easily available position, so it is necessary to make an improved design thereto.

### Summary of the Invention

An object of the present invention is to provide an improved wireless earset which can overcome the disadvantages mentioned above. The wireless earset includes: a main body portion which has a built-in microphone; an earphone portion which is attached to the main body portion; and a connecting device which connects the main body portion and the earphone portion, wherein, the earphone portion is held on the main body portion by the connecting device, and the connecting device has a rotating mechanism which cause the earphone portion to be rotated between a store state and a using state with respect to the main body portion.

In the wireless earset according to the invention, a Y-shaped frame is provided in an end of the main body portion, a space is formed between two Y-shaped arms of the Y-shaped frame to accommodate the earphone portion in the store state, the connecting device is constituted by axle-bearing holes in an end of the Y-shaped arms and a rotating shaft of the earphone portion, and the earphone portion can be rotated around the rotating shaft so that a longitudinal axis of the main body portion and that of the earphone portion form an angle of about 0°∼180°therebetween.

In the wireless earset according to the invention, the earphone portion can be rotated around the rotating shaft into the using state in which the longitudinal axis of the main body portion and that of the earphone portion form an angle of about 90°therebetween, and the connecting device is provided within a range of the rotation angle thereof with built-in position limiting or angle limiting mechanisms and a number of groove-protruding stops which may come to a stop in midway in this range.

In the wireless earset according to the invention, a bevel is formed in an upper end of the main body portion, another bevel is formed in a lower end of the earphone portion, the longitudinal axes of the main body portion and the earphone portion coincide into a straight line when the two bevels are kept contact to each other in the store state, the connecting device is constituted by a rotating shaft which is on one of the bevels and an axle-bearing cavity that is in the other bevel and corresponds to the rotating shaft, and the two bevels can be rotated while being kept contact to each other so that the earphone portion can be rotated by about 180°from the store state in which the two longitudinal axes coincide into a straight line to the using state in which the two longitudinal axes form an angle of about 90°.

In the wireless earset according to the invention, the bevel of the main body portion and the bevel of the earphone portion form an angle of 30°∼45° relative to their longitudinal axes respecively.

In the wireless earset according to the invention, the connecting device is provided at two extreme ends of the range of the rotation angle thereof with built-in position limiting or angle limiting mechanisms.

In the wireless earset according to the invention, the wireless earset is attached with a clamp.

In the wireless earset according to the invention, a rotating shaft for opening and closing the clamp is located in a position near a lower end of the main body portion, and a clamp mouth end of the clamp is located in a position near the earphone portion.

In the wireless earset according to the invention, a rotating shaft for opening and closing the clamp is located in a position near an upper end of the main body portion, and a clamp mouth end of the clamp is located in a position away from the earphone portion.

In the wireless earset according to the invention, a hollow hole is provided in a clamping face of the clamp.

In the wireless earset according to the invention, the clamp is in a hollow frame shape.

In the wireless earset according to the invention, the clamp is in a grid shape.

In the wireless earset according to the invention, the main body portion is also attached with a plugging port which receives and stores external information in a wired manner.

In the wireless earset according to the invention, the earphone portion can be rotated by an angle of at least 90° with respect to the main body portion.

In the wireless earset according to the invention, the connecting device is provided with a rotating shaft.

In the wireless earset according to the invention, the connecting device is provided with a knob.

In the wireless earset according to the invention, the connecting device is provided within the range of the rotation angle thereof with a number of groove stops.

In the wireless earset according to the invention, the connecting device is provided with a structure which is machined and fitted precisely.

The wireless earset of the invention has the following advantages: (1) an orientation of the earphone can be rotated. When the orientation of the earphone is rotated to coincide with a direction of a main body of the earset, the earset takes a long bar shape with a small transverse size, which can decrease package volume of the product and reduce cost of manufacture and management. In addition, the earset is convenient to be stored, and can be placed into a pocket or a wallet. When a call is made, the earphone can be rotated to form an angle which is about 90°with respect to the main body of the earset and is adapted to be held into a user's ears. Further, the earphone can be rotated to an angle suitable for it to be held into ears when a call is made so that it is convenient to make a talk. (2) the earset can be attached with a clamp. When not in use, the earset can be clamped at an expediently and easily available position. When the earset is to be used, it can be found at any moment so as not to be placed everywhere so that it is hard to find the earset quickly.

### Brief Description of the Drawings

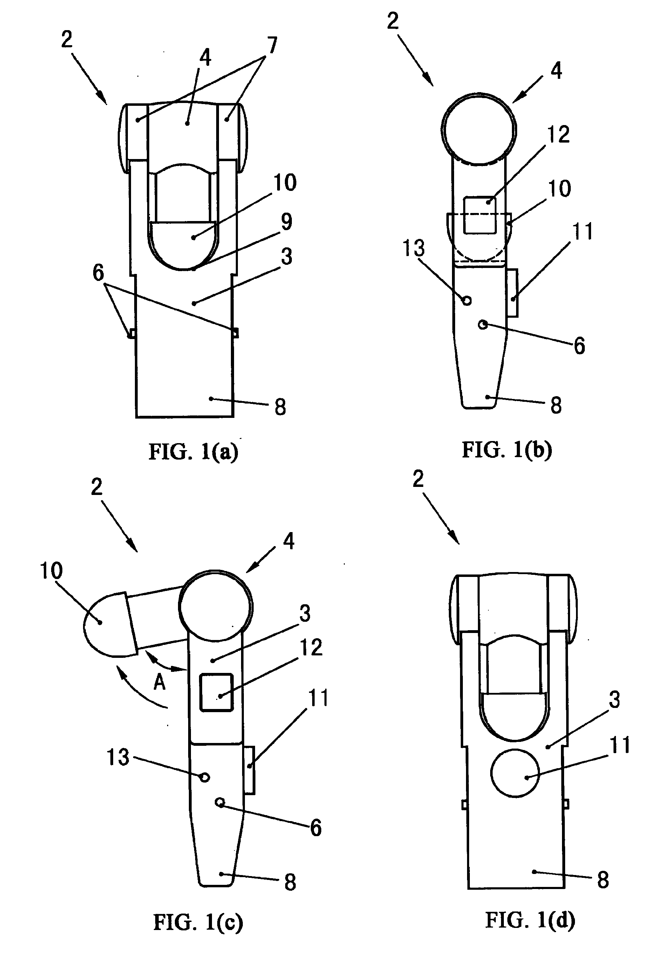

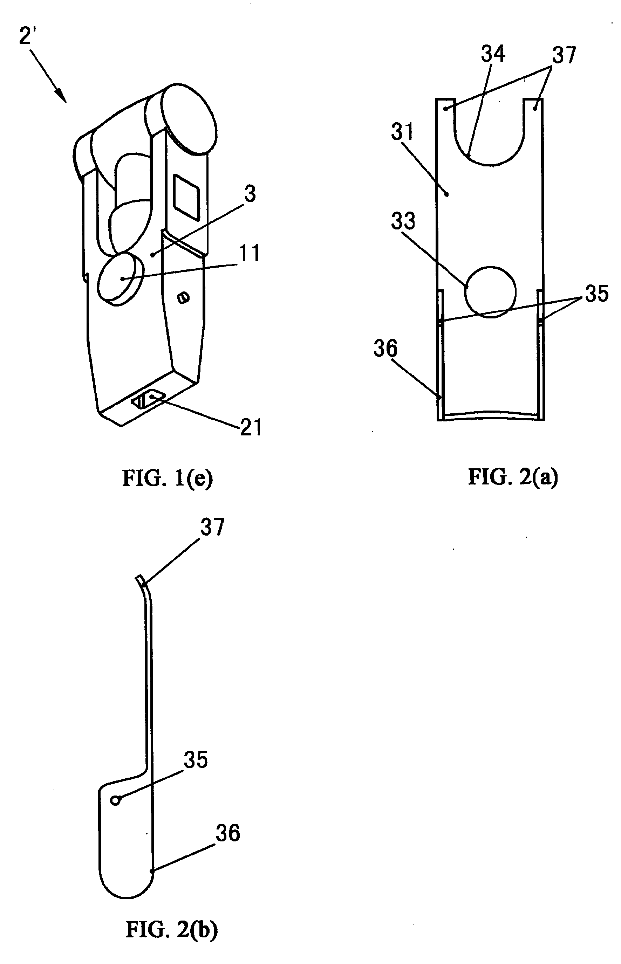

Figs. 1(a) to 1(e) are schematic diagrams showing a wireless earset which is not attached with a clamp according to a first embodiment of the invention, wherein, Fig. 1(a) is an inner face diagram showing a store state of the wireless earset, Fig. 1(b) is a side face diagram showing the store state of the wireless earset, Fig. 1(c) is a side face diagram showing a using state of the wireless earset, Fig. 1(d) is an outer face diagram showing the using state of the wireless earset, and Fig. 1 (e) is a perspective diagram showing the store state of the wireless earset.
Figs. 2(a) and 2(b) are schematic diagrams showing a clamp attached to the wireless earset according to the first embodiment of the invention, wherein, Fig. 2(a) is an inner face diagram of the clamp, and Fig. 2(b) is a side face diagram of the clamp.

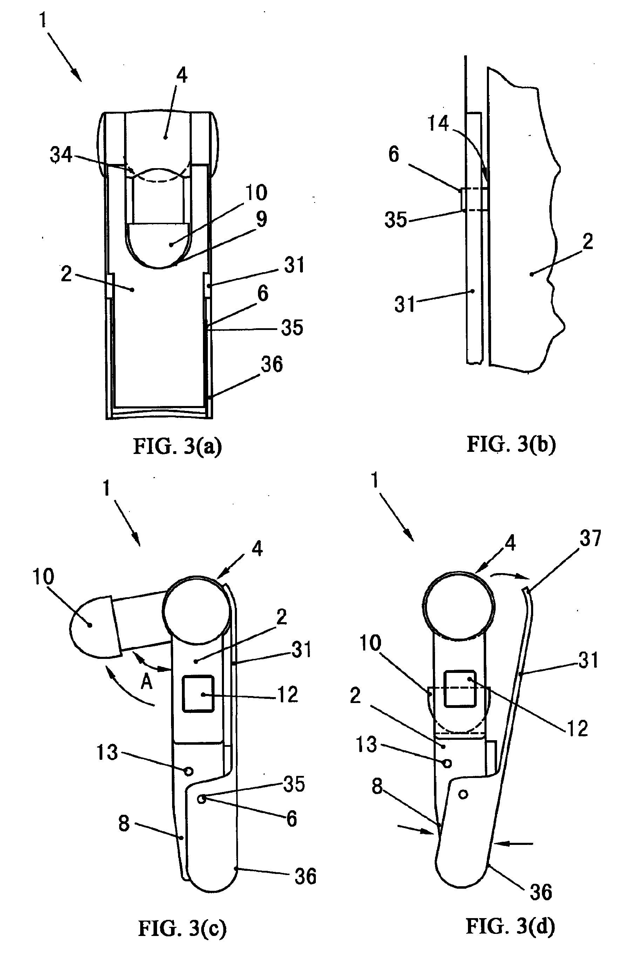

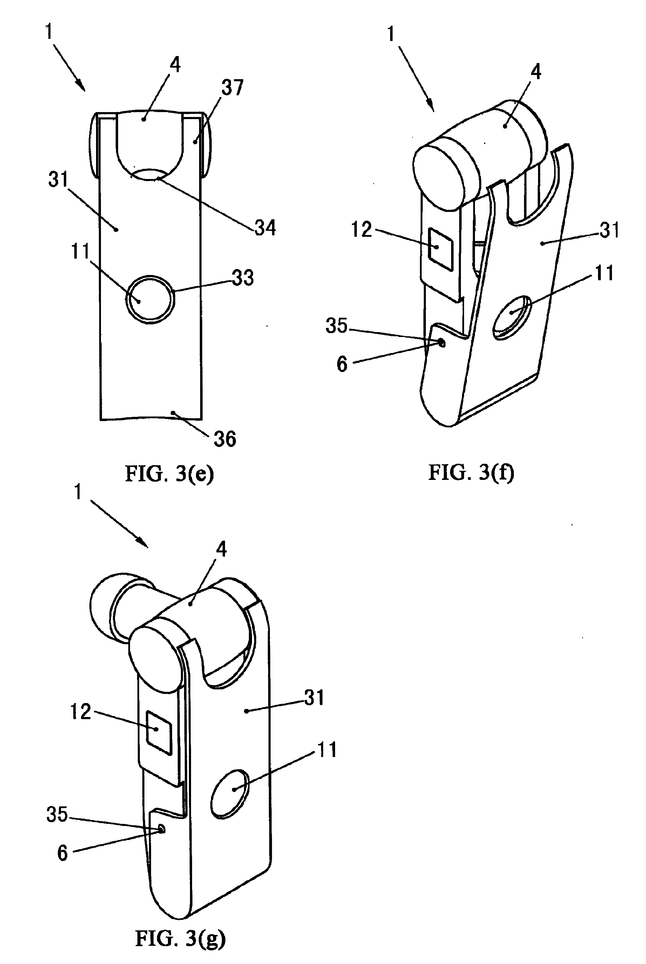

Figs. 3(a) to 3(g) are schematic diagrams showing a wireless earset which is attached with a clamp according to the first embodiment of the invention, wherein, Fig. 3(a) is an inner face diagram showing a store state of the wireless earset with the clamp, Fig. 3(b) is a partially enlarged diagram of the wireless earset shown in Fig. 3(a), Fig. 3(c) is a side face diagram showing a using state of the wireless earset with the clamp, Fig. 3(d) is a side face diagram showing the store state of the wireless earset with the clamp, Fig. 3(e) is an outer face diagram showing the store state of the wireless earset with the clamp, Fig. 3(f) is a perspective diagram showing the store state of the wireless earset with the clamp, and Fig. 3(g) is a perspective diagram showing the using state of the wireless earset with the clamp.

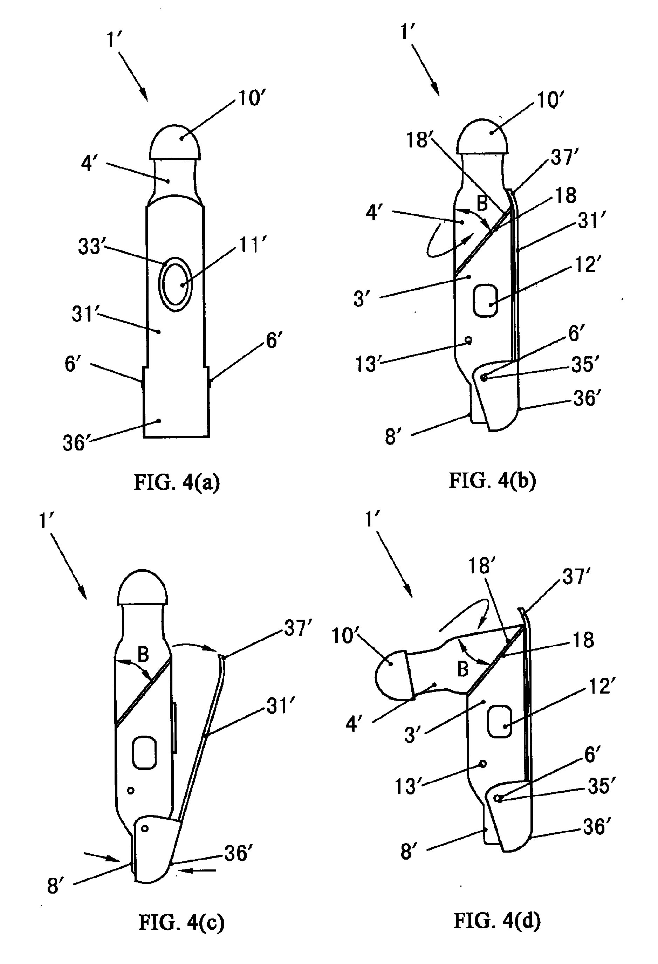

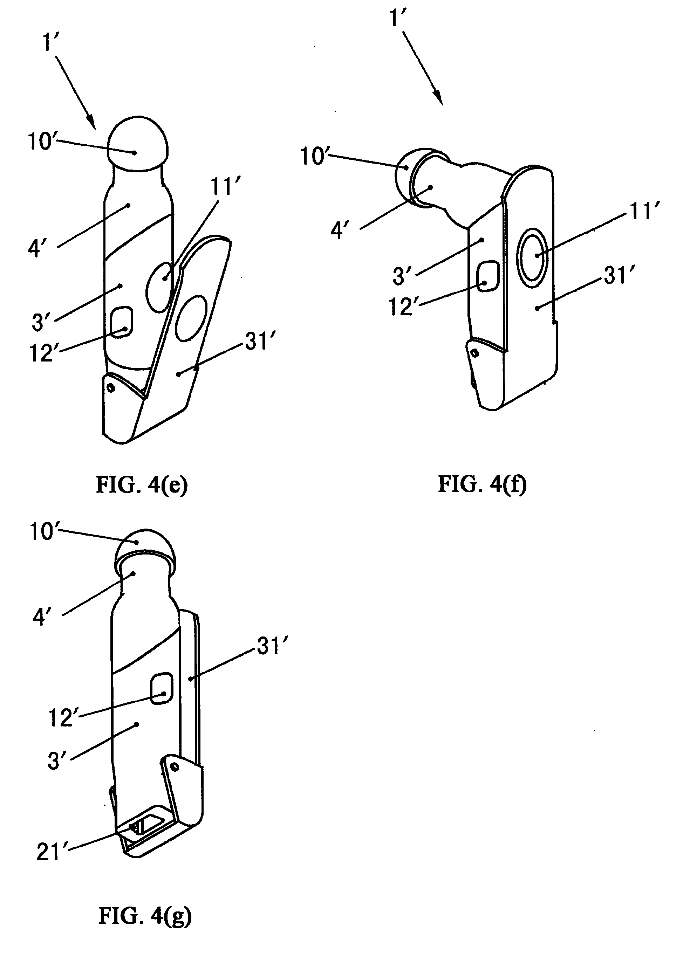

Figs. 4(a) to 4(g) are schematic diagrams showing a wireless earset with a bevel according to a second embodiment of the invention, wherein, Fig. 4(a) is an outer face diagram showing a store state of the wireless earset with the bevel, Fig. 4(b) is a side face diagram showing a store state of the wireless earset with the bevel, Fig. 4(c) is a side face diagram showing a store state of the wireless earset with the bevel, Fig. 4(d) is a side face diagram showing the using state of the wireless earset with the bevel, Fig. 4(e) is a perspective diagram showing the store state of the wireless earset with the bevel, Fig. 4(f) is a perspective diagram showing the using state of the wireless earset with the bevel, and Fig. 4(g) is a perspective diagram showing the store state of the wireless earset with the bevel.

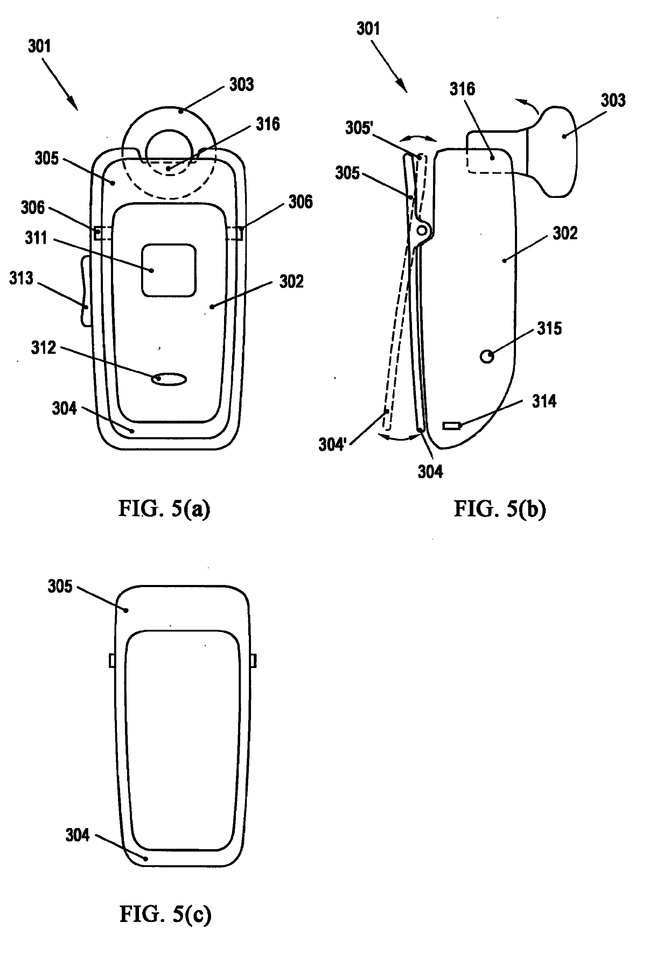

Figs. 5(a) to 5(c) illustrate the situation when a wireless earset according to a third embodiment of the invention is being used, wherein, Fig. 5(a) is an outer face diagram of the wireless earset according to the third embodiment of the invention, Fig. 5(b) is a side face diagram of the wireless earset shown in Fig. 5(a), and Fig. 5(c) is a schematic diagram of a clamp.

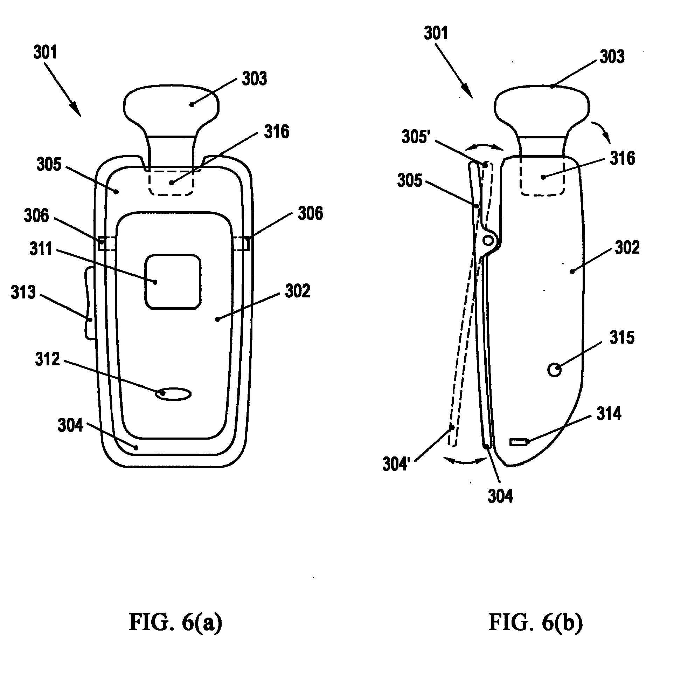

Fig. 6(a) and 6(b) illustrate the situation when the wireless earset according to the third embodiment of the invention is being stored, wherein, Fig. 6(a) is an outer face diagram of the wireless earset according to the third embodiment of the invention, and Fig. 6(b) is a side face diagram of the wireless earset according to the third embodiment.

### Detailed Description of the Preferred Embodiments

Exemplary embodiments of the invention will be described below with reference to the accompanying drawings.

### [First embodiment]

A wireless earset which is not attached with a clamp according to a first embodiment of the invention will be described with reference to Figs. 1(a) to 1(e).

Fig. 1(a) is an inner face diagram showing the store state of a wireless earset which is not attached with a clamp. In Fig. 1(a), a reference numeral 2 denotes a wireless earset which is not attached with a clamp according to the first embodiment of the invention. The figure shows an "inner face" of a main body portion 3, i.e. the face which is kept contact to a user's ears and cheek in use. A reference numeral 4 denotes an earphone portion which is stored in a space 9 embraced by two Y-shaped arms 7 of a Y-shaped frame located in an upper portion of the main body 3. A rotating shaft is provided in the bottom (an end away from an earphone head 10) of the earphone portion 4 and is rotated in axle-bearing holes located in both ends of the Y-shaped arms 7. A reference numeral 6 in the figure denotes a clamp shaft which is used to support the clamp when the clamp is attached. A reference numeral 8 denotes a lower end of the main body portion 3.

Fig. 1(b) is a right side view of the wireless earset shown in Fig. 1(a). A reference numeral 11 denotes a switch button which is provided on an outer face (the face which is not kept contact to a user's ears and cheek in use) of the main body portion 3. A reference numeral 12 denotes a volume button (another volume button not shown in the figure is provided on the side opposite to that of the volume button 12; one of the two buttons is used to increase volume, and the other button is used to decrease volume). A reference numeral 13 denotes a socket for charging the wireless earset. Other reference numerals in the figure respectively denote the same part as in the preceding figure. A dotted line and the reference numeral 10 indicate that the earphone portion 4 has been rotated to a position where the wireless earset is in the store state within the space 9 embraced by the two Y-shaped arms 7.

Fig. 1(c) is a side face diagram showing a using state of the wireless earset, whereupon the earphone portion 4 has been rorated outside the space 9 embraced by the two Y-shaped arms 7 and the wireless earset is in the using state. Axes of the earphone portion 4 and the main body portion 3 form an angle A and an arched arrow near the angle denotes a direction of the rotating action. Other reference numerals in the figure respectively denote the same part as the above. With regard to the angle A, generally, it ranges from 60°to 90°. The user may select the most convenient and comfortable angle so that the main body portion 3 is kept comfortably close to a user's ear and cheek when the earphone head 10 is inserted into an earhole.

Fig. 1(d) shows an outer face of the wireless earset shown in Fig. 1(a). As described above, the reference numeral 11 denotes the switch button of the wireless earset 2.

In connection with Figs. 1(a) to 1(d), it can be seen that the Y-shaped frame which has two Y-shaped arms 7 is provided in the upper portion of the main body portion 3 of the wireless earset 2, and the rotating shaft passes through the axle-bearong holes (not shown in the figures) of the Y-shaped arms 7 at two sides of the earphone portion 4. In actual fabrication, position limiting (or angle limiting) mechanisms (not shown in the figures) are provided on two extreme ends of a range of the rotation angle of the earphone portion 4. Meanwhile, a number of groove-protruding stops can be provided in the midway of the rotation so that the earphone portion 4 can come to a stop at any one groove-protruding stop in the whole range of rotation angle so as to keep the rotation angle constant, thus, the earphone portion 4 is located. When pushed again, the earphone portion 4 can be pushed to rotate to the next groove-protruding stop and to the remaining groove-protruding stops in an analogous way. The number of the groove-protruding stops may be from two to several tens (not shown in the figures) so that the user can select the most appropriate angle A therefrom.

Fig. 1(e) shows an additional solution of the embodiment. A reference numeral 21 denotes a USB concave port which is attached in the lower end 8 of the main body and which is used to receive and store external information in a wired manner.

A clamp 31 to be attached to the wireless earset 2 will be described below with reference to Figs. 2(a) and 2(b).

Fig. 2(a) shows an inner face of the clamp 31 to be attached to the wireless earset 2. A reference numeral 33 denotes a hollow hole which is provided to be fitted with the switch button 11 of the main body portion 3 and through which the user can press the switch button 11. A reference numeral 35 denotes axle-bearing holes which are used to attach the clamp 31 to the main body portion 3. A reference numeral 36 denotes a press-down portion of the clamp 31, which is pressed down to open the clamp 31. A reference numeral 37 denotes a clamp mouth end of the clamp. A reference numeral 34 denotes a notch for leaving a spare space for the rotation of the earphone portion 4.

Fig. 2(b) is a side face diagram of the clamp shown in Fig. 2(a) and the reference numerals in the figure respectively denote the same part as the above.

The wireless earset which is attached with the clamp 31 according to the first embodiment of the invention will be described below with reference to Figs. 3(a) to 3(g).

Fig. 3(a) is a schematic diagram showing that the wireless earset 2 shown in Fig. 1(a) and the clamp 31 shown in Fig. 2(a) are attached together. A reference numeral 1 denotes a wireless earset attached with the clamp 31. Other reference numerals in the figure respectively denote the same part as the above.

Fig. 3(b) is a partially enlarged diagram of the wireless earset shown in Fig. 3(a). A clamp shaft 6 of the wireless earset 2 has penetrated into the axle-bearing holes 35 of the clamp 31 and the clamp 31 is supported. A reference numeral 14 denotes a position where a spring (not shown in the figure) can be mounted.

Fig. 3(c) is a side face diagram of the wireless earset 1 with the clamp 31, at this time, the wireless earset 1 is in the talking (using) state. In this state, the earphone portion 4 has been rotated outside the space 9 embraced by the two Y-shaped arms 7 from the store position thereof and the earphone head 10 can be inserted into a user's ear for a talk. Other reference numerals in the figure respectively denote the same part as the above.

Fig. 3(d) shows the state in which the wireless earset 1 is not used and is ready to be stored. In the figure, the earphone portion 4 has been rotated to the store position thereof, i.e. inside the space 9 embraced by the two Y-shaped arms 7. The lower end 8 of the main body portion 3 and the press-down portion 36 of the clamp 31 are pressed by two fingers (as shown by two arrows opposite in direction), then the clamp mouth end 37 of the clamp 31 is opened (as shown by an arched arrow) so that the wireless earset 1 can be clamped and stored at an appropriate place. Other reference numerals in the figure respectively denote the same part as the above.

As shown in Figs. 3(c) and 3(d), the clamp shaft 6 of the main body portion 3 is located in a position near the lower end of the main body portion 3 and the clamp mouth end 37 of the clamp 31 is located in a position near the earphone portion 4.

Fig. 3(e) shows another face of the wireless earset shown in Fig. 3(a). The hollow hole 33 in the clamp 31 provides a due position for the switch button 11 so that the button can be operated conveniently. Other reference numerals in the figure respectively denote the same part as the above.

Figs. 3(f) and 3(g) are perspective diagrams of the wireless earset 1 with the clamp 31, further showing the store state and the using state of the wireless earset 1 respectively.

### [Second embodiment]

A wireless earset which is attached with a clamp according to a second embodiment of the invention will be described below with reference to Figs. 4(a) to 4(g).

In Fig. 4(a), a reference numeral 1' denotes a wireless earset which is attached with a clamp, a numeral 4' denotes an earphone portion, a numeral 10' denotes an earphone head, a numeral 31' denotes a clamp, a numeral 6' denotes a clamp shaft, a numeral 36' denotes a press-down portion of the clamp, a numeral 11' denotes a switch button of the wireless earset, and a numeral 33' denotes a hollow hole provided in the surface of the clamp for the switch button 11'.

Fig. 4(b) is a left side view of Fig. 4(a). A reference numeral 3' denotes a main body portion, a numeral 12' denotes a volume button, a numeral 13' denotes a socket for charging the wireless earset, a numeral 8' denotes a lower end of the main body portion 3', and a numeral 35' denotes axle-bearing holes for the clamp shaft 6' to pass through. A reference numeral 18 denotes a bevel formed in an upper end of the main body portion 3', and a reference numeral 18' denotes a bevel formed in a lower end of the earphone 4'. Each of these two bevels deflects from a longitudinal axis thereof by the same angle shown by a sign B, and the suitable angle B ranges from 30°to 45°. The two bevels 18 and 18' are kept contact to each other (as shown in the figure) to constitute a rotation surface in which the earphone portion 4' is rotatable with respect to the main body portion 3'. A connecting device for the earphone portion 4' and the main body portion 3' includes a rotating shaft which is on one of the bevels and an axle-bearing cavity which is in the other bevel and fitted with the rotating shaft (both the rotating shaft and the axle-bearing cavity are not shown in the figure). The earphone 4' shown in Fig. 4(b) is in a store position, whereupon the longitudinal axes of the earphone portion 4' and the main body portion 3' coincide into a straight line. If the earphone portion 4' is rotated by 180°in a direction shown by an arched arrow in the upper left portion in the figure, the longitudinal axes of the earphone portion 4' and the main body portion 3' form an angle of about 90°as shown in Fig. 4(d). When the angle B=45°, the angle of the two longitudinal axes is 90°. When the angle B=30°, the angle of the two longitudinal axes is 60°. The angle of the two longitudinal axes may be deduced by reference to the angle B in the same way. In manufacture, magnitude of the angle B is selected so that the angle of the two longitudinal axes makes the user comfortable. Position limiting (or angle limiting) mechanisms (not shown in the figure) are provided on two extreme ends of a rotatable range (180°) of the rotation surface constituted by the bevels 18 and 18'. Other reference numerals in the figure respectively denote the same part as the above.

Fig. 4(c) is a side face diagram showing the store state of the wireless earset with bevels. As shown by two arrows opposite to each other in direction, the lower end 8' of the main body portion 3' and the press-down portion 36' of the clamp 31' are pressed by two fingers, as shown by an arched arrow in the figure, then the clamp mouth end 37' of the clamp 31' is opened so that the wireless earset 1' which in the store state can be clamped at an appropriate place.

Fig. 4(d) shows a talking (using) state. The state shown in the figure is achieved by rotating the earphone portion 4' relative to the main body portion 3' shown in Fig. 4(b) by 180°in the rotation surface constituted by the bevels 18 and 18', then the earphone head 10' can be inserted into a user's ear for use. If the earphone portion 4' is required to be rotated into the store state, the earphone portion 4' can be relatively rotated by 180°in a direction of an arched arrow in an upper portion of the figure thereby to restore to the state shown in Fig. 4(b) or 4(c).

As shown in Figs. 4(c) and 4(d), the clamp shaft 6' of the main body portion 3' is located in a position near the lower end of the main body portion 3' and the clamp mouth end 37' of the clamp 31' is located in a position near the earphone portion 4'.

Figs. 4(e) and 4(f) are perspective diagrams respectively further showing the store state and the using state of the wireless earset 1'.

As in the first embodiment, in the second embodiment, as shown in Fig. 4(g), a plugging port (USB port) 21' which receives and stores external information in a wired manner is provided in the lower end 8' of the main body portion 3'.

In the first embodiment, it is preferable that the outer shape of the wireless earset be flat, and the earphone portion of the wireless earset is rotated in and out at the longer side of the cross section (approximately a rectangle) of the wireless earset so that the specific structure can be arranged. In the second embodiment, it is preferable that the cross section of the wireless earset be approximately square so that it is convenient to rotate the earphone portion around the central axis of the wireless earset. It is a matter of course that the square can be substituted by a square with four fillets or even an approximate circle, which is also possible.

### [Third embodiment]

A wireless earset according to a third embodiment of the invention will be described below with reference to Figs. 5(a) to 5(c) and Figs. 6(a) and 6(b).

Fig. 5(a) is an outer face (the face which is not kept contact to ears) diagram of a wireless earset 301 according to a third embodiment of the invention. A reference numeral 302 denotes a main body portion with a built-in microphone, a numeral 303 denotes an earphone portion, a numeral 316 denotes a connecting device, a numeral 304 denotes a clamp (the clamp 304 can also be omitted), a numeral 305 denotes a portion of the clamp 304 to be pressed down by hand, and a numeral 306 denotes a pivot of the clamp 304, the pivot being attached with a spring (not shown in the figure). A reference numeral 311 denotes a switch button, a numeral 312 denotes an indicating lamp, and a numeral 313 denotes a volume button.

Fig. 5(b) is a side face diagram of Fig. 5(a). It can be seen from the figure that the earphone 303 and the main body 302 form an angle of about 90° which is a commonly used angle (the rotation angle may range from 0° to 300°, not shown in the figure). An arrow near the earphone 303 denotes a direction in which the earphone can be rotated. In order to achieve the function of rotating the earphone, the rotation angle should be made as large as possible in manufacturing the connecting device 316 and it should be ensured that the earphone can be rotated by at least 90°. For convenient use, a number of groove-protruding stops can be fabricated in the connecting device 316 in manufacture (for example, when plastic material is molded). Thus, in the whole range of the rotation abgle, the earphone portion 303 can come to a stop at any one groove-protruding stop to keep the rotation angle constant, and when pushed again, the earphone portion 303 can be rotated to the next groove-protruding stop and to the remaining groove-protruding stops in an analogous way. The number of the groove-protruding stops may be from two to several tens (not shown in the figures). The connecting device 316 can also be provided with a rotating shaft (not shown in the figures). Thus, in the whole range of the rotation angle, the earphone portion 303 can come to a stop at any angle so as to keep the rotation angle constant, and when pushed again, the earphone portion 303 can be rotated to the next angle and to the remaining angles in an analogous way. The connecting device 316 can also be provided with a knob. Thus, the earphone portion 303 can come to a stop at any angle so as to keep the rotation angle constant, and when pushed again, the earphone portion 303 can be rotated to the next angle and to the remaining angles in an analogous way (not shown in the figures). The connecting device 316 can also be provided within the range of the rotation angle thereof with built-in position limiting (or angle limiting) mechanisms (not shown in the figures). Thus, the earphone portion 303 can come to a stop at any angle so as to keep the rotation angle constant, and when pushed again, the earphone portion 303 can be rotated to the next angle and to the remaining angles in an analogous way (not shown in the figures). The connecting device 316 can also be provided within the range of the rotation angle thereof with a number of groove stops (not shown in the figures), and the number of the groove stops may be from two to several tens. Thus, the earphone portion 303 can come to a stop at any angle so as to keep the rotation angle constant, and when pushed again, the earphone portion 303 can be rotated to the next angle and to the remaining angles in an analogous way. The connecting device 316 can also be provided within the range of the rotation angle thereof with a structure (not shown in the figures) which is machined and fitted precisely and which realizes rotation and location by means of frictional force, and a friction agent can be applied to friction surfaces, for example. Thus, the earphone portion 303 can come to a stop at any angle so as to keep the rotation angle constant, and when pushed again, the earphone portion can be rotated to the next angle and to the remaining angles in an analogous way.

A side face of the clamp 304 and the press-down portion 305 of the clamp can be seen from Fig. 5(b), and the clamp 304' and the press-down portion 305' shown by a dotted line indicate that the clamp is pressed down by hand at the position of 305' and is opened at the position of 304'. As shown in Fig. 5(b), the pivot 306 of the clamp 304 is located in a position near an upper end of the main body portion 302 and a clamp mouth end of the clamp 304 is located in a position away from the earphone 303. Bidirectional arched arrows near the reference numerals 304, 304' and 305, 305' denote a direction in which the clamp is opened or closed and a direction in which the pressing is performed by hand, respectively. A reference numeral 314 denotes an opening provided for the built-in microphone. A reference numeral 315 denotes a socket provided for charging the wireless earset. Other reference numerals in the figure respectively denote the same part as the above.

Fig. 5(c) is a schematic diagram individually showing the clamp 304 and the press-down portion 305. It can be seen from the figure that the clamp 304 is in a hollow frame shape. Since the clamp 304 is in a frame shape, it will not shield the switch button 311 and the indicating lamp 312. The frame shape is not limited to the shape shown in the figure and the frame shape should be a shape suitable for the wireless earset 301. The clamp 304 attached to the main body portion 302 may also be in a grid shape or a conventional shape (not shown in the figure).

Figs. 6(a) and 6(b) shows that the earphone 303 shown in Figs. 5(a) and 5(b) has been rotated above the main body 302 into an approximately same direction as the main body 302. In this case, the wireless earset 301 is in the store state. Other reference numerals in the figure respectively denote the same part as the above.

While the exemplary embodiments of the invention have been described in detail with reference to the drawings, the invention is not restricted to the above specific embodiments. It is apparent for those skilled in the art to make various changes and modifications to the invention without departing from the spirit and scope of the invention. The scope of the invention is defined by the following claims and equivalents thereof.

## Claims

1. A wireless earset, comprising
a main body portion which has a built-in microphone;
an earphone portion which is attached to the main body portion; and
a connecting device which connects the main body portion and the earphone portion,
**characterized in that** the earphone portion is held on the main body portion by the connecting device, and the connecting device has a rotating mechanism which cause the earphone portion to be rotated between a store state and a using state with respect to the main body portion.

2. The wireless earset according to claim 1, wherein, a Y-shaped frame is provided in an end of the main body portion, a space is formed between two Y-shaped arms of the Y-shaped frame to accommodate the earphone portion in the store state , the connecting device is constituted by axle-bearing holes in an end of the Y-shaped arms and a rotating shaft of the earphone portion, and the earphone portion can be rotated around the rotating shaft so that a longitudinal axis of the main body portion and that of the earphone portion form an angle of about 0°∼180°therebetween.

3. The wireless earset according to claim 2, wherein, the earphone portion can be rotated around the rotating shaft into the using state in which the longitudinal axis of the main body portion and that of the earphone portion form an angle of about 90°therebetween, and the connecting device is provided within the range of the rotation angle thereof with built-in position limiting or angle limiting mechanisms and a number of groove-protruding stops which may come to a stop in midway.

4. The wireless earset according to claim 1, wherein, a bevel is formed in an upper end of the main body portion, another bevel is formed in a lower end of the earphone portion, the longitudinal axes of the main body portion and the earphone portion coincide into a straight line when the two bevels are kept contact to each other in the store state, the connecting device is constituted by a rotating shaft which is on one of the bevels and an axle-bearing cavity which is in the other bevel and corresponds to the rotating shaft, and the two bevels can be rotated while being kept contact to each other so that the earphone portion can be rotated by about 180°from the store state in which the two longitudinal axes coincide into a straight line to the using state in which the two longitudinal axes form an angle of about 90°.

5. The wireless earset according to claim 4, wherein, the bevel of the main body portion and the bevel of the earphone portion form an angle of 30°∼45° relative to their longitudinal axes respectively.

6. The wireless earset according to claim 1 or 4, wherein, the connecting device is provided on two extreme ends of the range of the rotation angle thereof with built-in position limiting or angle limiting mechanisms.

7. The wireless earset according to claim 1 or 4, wherein, the wireless earset is attached with a clamp.

8. The wireless earset according to claim 7, wherein, a rotating shaft for opening and closing the clamp is located in a position near a lower end of the main body portion, and a clamp mouth end of the clamp is located in a position near the earphone portion.

9. The wireless earset according to claim 7, wherein, a rotating shaft for opening and closing the clamp is located in a position near an upper end of the main body portion, and a clamp mouth end of the clamp is located in a position away from the earphone portion.

10. The wireless earset according to claim 7, wherein, a hollow hole is formed in a clamping face of the clamp.

11. The wireless earset according to claim 7, wherein, the clamp is in a hollow frame shape.

12. The wireless earset according to claim 7, wherein, the clamp is in a grid shape.

13. The wireless earset according to claim 1, wherein, the main body portion is also attached with a plugging port which receives and stores external information in a wired manner.

14. The wireless earset according to claim 1, wherein, the earphone portion can be rotated by an angle of at least 90° with respect to the main body portion.

15. The wireless earset according to claim 1, wherein, the connecting device is provided with a rotating shaft.

16. The wireless earset according to claim 1, wherein, the connecting device is provided with a knob.

17. The wireless earset according to claim 1, wherein, the connecting device is provided within the range of the rotation angle thereof with a number of groove stops.

18. The wireless earset according to claim 1, wherein, the connecting device is provided with a structure which is machined and fitted precisely.
